Europäisches Patentamt

European Patent Office

Office européen des brevets

(11) Veröffentlichungsnummer: **0 409 123 A2**

# (12) EUROPÄISCHE PATENTANMELDUNG

(21) Anmeldenummer: **90113538.4**

(22) Anmeldetag: **14.07.90**

(51) Int. Cl.⁵: **B61F 5/32**, B61F 5/52

(30) Priorität: **21.07.89 DE 3924046**

(43) Veröffentlichungstag der Anmeldung:
**23.01.91 Patentblatt 91/04**

(84) Benannte Vertragsstaaten:
**AT BE DE ES FR GB IT NL SE**

(71) Anmelder: **BASF Aktiengesellschaft**
**Carl-Bosch-Strasse 38**
**D-6700 Ludwigshafen(DE)**

(72) Erfinder: **Jakobi, Reinhard, Dr.**
**Sohlstrasse 13**
**D-6701 Maxdorf(DE)**
Erfinder: **Schuermann, Helmut**
**Burgunderstrasse 13**
**D-6701 Maxdorf(DE)**

(54) **Radsatzlenker für Reisezugwagen-Drehgestelle.**

(57) Der Radsatzlenker für Reisezugwagen-Drehgestelle besteht aus einem Federkörper 12 aus faserverstärkten Kunststoffen und jeweils einer ein Zahnprofil tragenden Metallplatte 13, 14 an den Krafteinleitungsbereichen des Federkörpers. Zwecks Reduzierung der Vertikalsteifigkeit bei gleichzeitigem Erhalt der Seitensteifigkeit des Radsatzlenkers ist der Federkörper aus mindestens zwei gleich breiten und zumindest annähernd gleich dicken Teilen 15 und 16 aufgebaut, die in den Krafteinleitungsbereichen über jeweils eine Zwischenschicht 17, 18 form- und/oder stoffschlüssig miteinander verbunden sind.

FIG.2

EP 0 409 123 A2

## RADSATZLENKER FÜR REISEZUGWAGEN-DREHGESTELLE

Die Erfindung bezieht sich auf einen Radsatzlenker für Reisezugwagen-Drehgestelle entsprechend dem Oberbegriff des Anspruchs 1.

Derartige Radsatzlenker sind aus der DE-Zeitschrift "Schienenfahrzeuge", 3/1986, Seite 125 ff. bekannt. Sie bestehen aus einem einteiligen, an den Enden aufgedickten Federkörper aus glasfaserverstärktem Kunststoff und sind mittels Zahnverbindung im Rahmen bzw. Lagergehäuse des Drehgestells befestigt. Die Seitensteifigkeit solcher Radsatzlenker, die mit der eines Stahllenkers vergleichbar sein muß, erfordert jedoch große Federdicken, denn die maximalen Federbreiten bei Reisezugwagen-Drehgestellen sind aufgrund des Einbauraums vorgegeben. Es hat sich gezeigt, daß dann bei vertikaler Einfederung unzulässig hohe Spannungen in den Krafteinleitungsbereichen entstehen. Diese führen, ausgehend von notwendigen Bohrungen für die Befestigungsmittel, zu Rissen und damit zu raschem Verschleiß der Radsatzlenker. Darüber hinaus ist die Herstellung der Radsatzlenker aufwendig, da für die aufgedickten Enden zusätzliches Fasermaterial vorgesehen werden muß, das nicht über die gesamte Länge des Federkörpers geführt werden kann.

Mit der Erfindung soll ein Radsatzlenker für Reisezugwagen-Drehgestelle nach dem Oberbegriff des Anspruchs 1 geschaffen werden, welcher von den geschilderten Mängeln frei ist und insbesondere durch Reduzierung der Vertikalsteifigkeit bei gleichzeitigem Erhalt der Seitensteifigkeit ein deutlich niedrigeres Biegespannungsniveau aufweist.

Zur Lösung dieser Aufgabe werden die Merkmale des Kennzeichens des Anspruchs 1 vorgeschlagen. Vorteilhafte Weiterbildungen des Erfindungsgegenstandes sind den beiden unteransprüchen zu entnehmen.

Erfindungsgemäß besteht der Radsatzlenker aus einem Federkörper, der aus zwei oder mehreren Teilen etwa gleichen Abmessungen zusammengesetzt ist. Die Teile werden nach üblichen Preß- oder Strangpreßverfahren aus mit Kunststoff getränkten Fasermaterialien gefertigt.

Als Fasermaterialien kommen strang- oder bandförmige Gebilde mit im wesentlichen in einer Richtung orientierten Fasern aus Glas oder Kunststoffen in Betracht. Diese ermöglichen gleichzeitig eine elektrische Isolation von Lagergehäuse und Rahmen des Drehgestells.

Geeignete Kunststoffe für das Tränken dieser Fasermaterialien sind thermoplastisch verarbeitbare Kunststoffe und insbesondere härtbare Kunststoffe, die durch freie Radikale vernetzt werden können, wie z.B. ungesättigte Polyesterharze, ungesättigte und gesättigte Acrylharze, modifizierte Epoxidharze, modifizierte Polyurethanharze oder Mischungen dieser Harze. Außerdem können mit Erfolg auch Gemische dieser Harze mit damit mischpolymerisierbaren ungesättigten Monomeren verwendet werden.

Die Teile des Federkörpers werden über eine Zwischenschicht form- und/oder stoffschlüssig miteinander verbunden, wobei die Zwischenschicht lediglich in den Krafteinleitungsbereichen ausgebildet wird. Es entsteht dadurch ein Federkörper mit einem lichten Zwischenraum, der so dimensioniert werden muß, daß sich die Teile bei der vertikalen Einfederung des Radsatzlenkers nicht berühren. Insgesamt hat sich eine Dicke der Zwischenschicht von etwa 0,5 bis etwa 2,5 mm als besonders zweckmäßig erwiesen. Die Zwischenschicht besteht ebenfalls aus faserverstärktem Kunststoff, wobei die Fasern in gebundener Form vorliegen, beispielsweise in Form von Geweben, Gewirken, Gelegen, Matten oder Vliesen. Es läßt sich dadurch das Lastübertragungsverhalten innerhalb der Krafteinleitungsbereiche verbessern.

An den Enden des Federkörpers, d.h. in den Krafteinleitungsbereichen des Radsatzlenkers ist jeweils eine ein Zahnprofil tragende Platte, vorzugsweise eine Metallplatte vorgesehen. Die Verzahnung greift an eine entsprechende Gegenverzahnung am Rahmen bzw. am Achslager des Drehgestells an. Zwischen dem Federkörper und den Platten kann eine weitere, den Zwischenschichten zwischen den Teilen des Federkörpers entsprechende Zwischenschicht angebracht sein, um Ermüdungsschäden bei den Fasern des Federkörpers zu vermeiden. Diese werden hauptsächlich durch Reibverschleiß hervorgerufen. Außerdem mildert die zwischenschicht Spannungen, die sich durch unterschiedliches Wärmeausdehnungsverhalten von Metall und faserverstärktem Kunstoff ergeben. Zur Unterstützung der stoffschlüssigen Verbindung von Zwischenschicht und Platte kann die Platte auf ihrer am Federkörper anliegenden Oberfläche profiliert sein, was einen zusätzlichen Formschluß bewirkt.

Nach einem weiteren Merkmal der Erfindung enthalten die Teile des Federkörpers faserige Flächengebilde mit in einer Richtung orientierten Fasersträngen und zwischen diesen Flächengebilden wenigstens ein Gewebe. Das Gewebe kommt dabei in einem Bereich niedriger Spannung zu liegen und wirkt der Ausbreitung gegebenenfalls entstehender Risse entgegen. Auf diese Weise wird die Lebensdauer der Radsatzlenker wesentlich verlängert.

Ein Ausführungsbeispiel der Erfindung wird nachfolgend unter Hinweis auf die Zeichnungen erläutert. Es zeigt

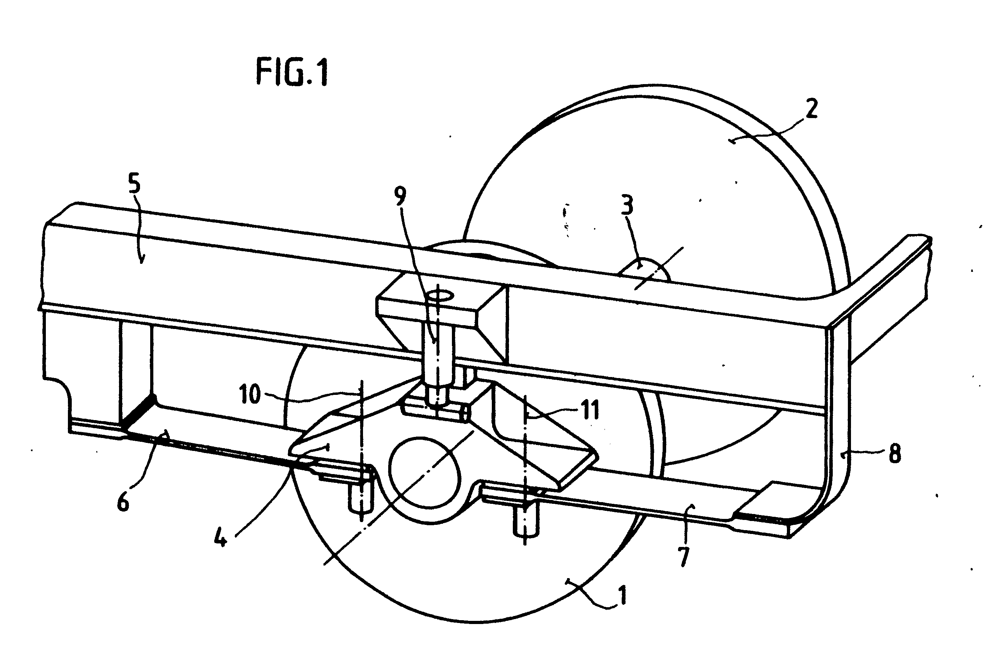

Fig. 1 ein Teil eines Reisezugwagen-Drehgestells in perspektivischer Darstellung,
Fig. 2 einen Radsatzlenker in Seitenansicht und
Fig. 3 den Radsatzlenker nach Fig. 2 in der Aufsicht.

Reisezugwagen-Drehgestelle enthalten üblicherweise zwei Radsätze, von denen ein Radsatz, bestehend aus den Rädern 1 und 2 sowie der Achse 3 dargestellt ist. Die Achse ist in zwei Gehäusen 4 gelagert. Zwischen den Gehäusen und einer Rahmenkonstruktion 5 sind zwei identische Radsatzlenker 6 und 7 angebracht, von denen der Radsatzlenker 6 fest mit dem Rahmen verbunden ist und der Radsatzlenker 7 an einen Winkellenker 8 anschließt. Der Winkellenker bewirkt einen Längenausgleich bei vertikaler Einfederung des Radsatzes. Mit 9 ist ein gelenkig aufgehängter Stoßdämpfer bezeichnet, welcher zusammen mit jeweils zwei vorgespannten Schraubenfedern pro Rad die dynamischen Kräfte in vertikaler Richtung überträgt. Die Schraubenfedern 10 und 11 sind angedeutet.

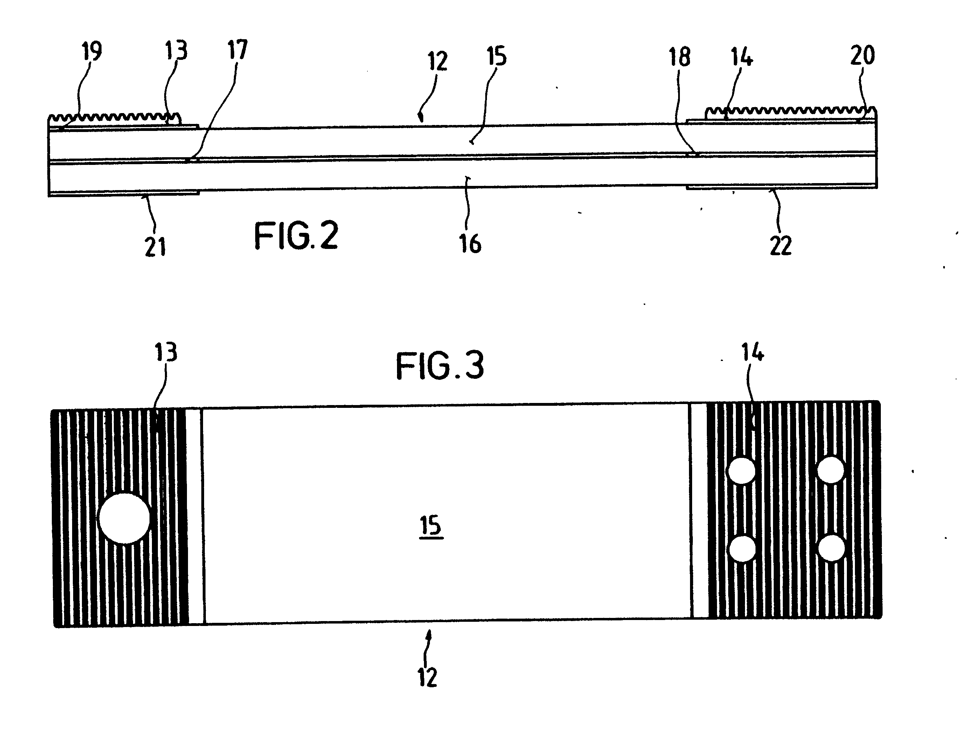

Gemäß Fig. 2 bestehen die Radsatzlenker 6 und 7 aus einem Federkörper 12 und jeweils einer Metallplatte 13 bzw. 14 an den Federenden. Der Federkörper weist zwei gleich breite und gleich dicke Teile 15 und 16 auf, die durch Zwischenschichten 17 bzw. 18 auf Abstand gehalten werden. Weitere Zwischenschichten 19 und 20 sind zwischen den Metallplatten und dem Teil vorgesehen. Auf der unterseite des Teils 16 befindet sich ein plattenförmiger Verschleißschutz 21 bzw. 22.

Die Zahnprofil tragenden Metallplatten sowie die jeweils aus Faserverbundwerkstoffen gefertigten Zwischenschichten, Federkörper und Verschleißschutz sind form- und/oder stoffschlüssig miteinander verbunden. Die Befestigung der Radsatzlenker am Rahmen bzw. Winkellenker und am Gehäuse erfolgt mittels Schraubverbindungen, für die entsprechende Bohrungen in den Krafteinleitungsbereichen angebracht sind (Fig. 3).

## Ansprüche

1. Radsatzlenker für Reisezugwagen-Drehgestelle mit einem Federkörper aus faserverstärkten Kunststoffen und jeweils einer ein Zahnprofil tragenden Platte an den Krafteinleitungsbereichen des Federkörpers, dadurch gekennzeichnet, daß der Federkörper 12 aus mindestens zwei gleich breiten und zumindest annähernd gleich dicken Teilen 15 u. (16) besteht, die in den Krafteinleitungsbereichen über jeweils eine Zwischenschicht 17 bzw. 18 form- und/oder stoffschlüssig miteinander verbunden sind.

2. Radsatzlenker nach Anspruch 1, dadurch gekennzeichnet, daß die das Zahnprofil tragenden Platten 13 und 14 und das eine Teil 15 des Federkörpers 12 über jeweils eine Zwischenschicht 19 bzw. 20 miteinander verbunden sind.

3. Radsatzlenker nach Anspruch 1, dadurch gekennzeichnet, daß die Teile und 16 des Federkörpers 12 faserige Flächengebilde mit in einer Richtung orientierten Fasersträngen und zwischen diesen Flächengebilden wenigstens ein Gewebe enthalten.

FIG.1

EP 0 409 123 A2

FIG.2

19  13  17          12  15          18  14  20

21          FIG.2          16          22

FIG.3

13                          14

15

12

EP 0 409 123 A2